# EUROPEAN PATENT APPLICATION

(11) **EP 4 545 400 A1**
(43) Date of publication of application: **30.04.2025**
(21) Application number: 22963724.4
(22) Date of filing: 31.10.2022
(51) Int. Cl.: B63C 11/52, B63G 8/16, B63G 8/26, B63G 8/39

(54) **VISION-GUIDED INTELLIGENT FASTENING BOLT INSPECTION DEVICE**

(71) Applicant: CGNPC Inspection Technology Co., Ltd., Shenzhen, Guangdong 518000 (CN); Suzhou Nuclear Power Research Institute Co., Ltd., Suzhou, Jiangsu 215004 (CN); China General Nuclear Power Group, Futian District Shenzhen Guangdong 518000 (CN); CGN Power Co., Ltd., Futian District Shenzhen Guangdong 518000 (CN)
(72) Inventor: XU, Junlong, Suzhou, Jiangsu 215127 (CN); MA, Guanbing, Suzhou, Jiangsu 215127 (CN); TANG, Jianbang, Suzhou, Jiangsu 215127 (CN); WANG, Weiqiang, Suzhou, Jiangsu 215127 (CN); ZENG, Chenming, Suzhou, Jiangsu 215127 (CN); MA, Chao, Suzhou, Jiangsu 215127 (CN); WANG, Tao, Suzhou, Jiangsu 215127 (CN); WU, Jianrong, Suzhou, Jiangsu 215127 (CN); HUANG, Chunming, Suzhou, Jiangsu 215127 (CN); SHU, Jialong, Suzhou, Jiangsu 215127 (CN); CHEN, Yang, Suzhou, Jiangsu 215127 (CN); LIU, Chao, Suzhou, Jiangsu 215127 (CN); LI, Jie, Suzhou, Jiangsu 215127 (CN)
(74) Representative: Westphal, Mussgnug & Partner, Patentanwälte mbB
(86) International application number: PCT/CN2022/128616
(87) International publication number: WO 2024/092402

(57) **Abstract**

A vision-guided intelligent fastening bolt inspection device, comprising: a frame(11), a main buoyancy body (1), which is mounted on the frame (11) and serves as a main buoy.ancy source of the inspection device, propellers (3), used for controlling the movement direction of the inspection device, an ultrasonic inspection module (5): and an underwater self-stabilization moving platform (4), which comprises an upper nut sliding block (403) and a lower mutsliding block (411) which are opposite in movement direction, a balancing weight block (408), and a self-stabilization driving part used for driving the upper nut sliding block (403) and the lower nut sliding block (411) to move in opposite directions, wherein the ultrasonic inspection module(5) is fixedly connected to the upper nut sliding block (403), and the balancing weight block (408) is fixedly connected to the lower nut sliding block (411), or the ultrasonic inspection module (5) is fixedly connected to the lower mut sliding block (411), and the balancing weight block (408) is fixedlyconnected to the upper nut sliding block (403).

## Description

### FIELD

The invention belongs to the field of nuclear power inspection device, particularly a vision-guided intelligent fastening bolt inspection device.

### BACKGROUND

The reactor internals of a nuclear power plant are all other components in the reactor pressure vessel except the fuel assembly and its related components, including the upper core supporting component, the lower core supporting component, and the core measuring supporting structure. The internals are the key components to support and fix the core assembly and bear the core weight, and their structural integrity is of great significance to the safe operation of nuclear power units. Many fastening bolts are installed in the internals of the reactor, which are exposed to high temperature, high pressure, strong neutron irradiation, and vibration for a long time, and are prone to radiation stress corrosion cracks. Failure of fastening bolts will lead to a loose connection of internals and reduce the overall stiffness of internals, which will harm nuclear fuel assembly under the impact of primary coolant. During the overhaul, it is necessary to carry out ultrasonic and video inspections on the fastening bolts of internals to ensure the structural integrity of internals.

At present, there is a robot using a frame structure, when being used, the robot will be mounted on the top of the enclosure plate, forming a fixed platform, multi-freedom manipulator of the lower end of the installation can carry the ultrasound probe on the implementation of the inspection of the enclosure plate bolts. There is also a robot that is a micro-submarine, in the cylindrical buoyant cabin installed with the power system, ultrasonic probe, and auxiliary systems, through the operation of the underwater robot to realize the ultrasonic probe on the inspection of the enclosure plate bolts. Rack-mounted units require complex device disassembly before and after inspection, which takes up more time for in-service inspections. The underwater robot realizes the sinking, floating, and hovering of the underwater robot by controlling the vertical propeller. Due to the difficulty of absolutely maintaining the thrust of the propeller in a constant force state, and the rotation of the propeller will produce jitter, etc., the underwater robot realizes the hovering in the water which will be maintained in the upper and lower ranges of a certain depth and floats in the upper and lower ranges. This will affect the focus of the video inspection and ultrasonic inspection efficiency, while the inspection tool needs to move laterally according to the different positions of the part to be inspected, will inevitably produce changes in the center of gravity or the center of buoyancy, affecting the positioning of the underwater robot. Angular deviation (non-parallel state) of the camera's lens from the part to be inspected can distort the screen of frequency inspection.

### SUMMARY

The purpose of the invention is to provide a vision-guided intelligent fastening bolt inspection device, which can ensure that the center of gravity of an underwater self-stabilization moving platform remains unchanged when moving, and is beneficial to maintaining self-balance under water.

To solve the above technical problems, the invention adopts the following technical scheme: a vision-guided intelligent fastening bolt inspection device, which comprises:
a frame;
The main buoyancy body, which mounted on the frame and serves as a main buoyancy source of the inspection device;
Propellers,used for controlling the moving direction of the inspection device, the direction of movement is a first direction of movement;
An ultrasonic inspection module, which is used for ultrasonic inspection of fastening bolts;
It also comprises:
   An underwater self-stabilization moving platform,which comprises an upper nut sliding block moving in a second motion direction, a lower nut sliding block moving in a third motion direction, a balancing weight block, and a self-stabilization driving part for driving the upper nut sliding block and the lower nut sliding block, the second motion direction and the third motion direction are always opposite, the ultrasonic inspection module is fixedly connected to the upper nut sliding block, the balancing weight block is fixedly connected to lower nut sliding block, or the ultrasonic inspection module is fixedly connected to the lower nut sliding block, the balancing weight block is fixedly connected to the upper nut sliding block; the self-stabilization driving part comprises side plates which are oppositely arranged, a plurality of guiding shafts mounted between the side plates, and an upper and lower screw mounted between the side plates and capable of rotating, the upper nut sliding block slidingly sleeved on two of the guiding shafts and screwing with the upper screw, and the lower nut sliding block slidingly sleeved on the other two guiding shafts and screwing with the lower screw, the upper screw and the lower screw are threaded in opposite direction; the self-stabilization driving part comprises a first gear coaxially fixedly connected with the upper screw, a second gear coaxially fixedly connected with the lower screw, a second motor gear to drive the first and second gears to rotate, and a third motor driving the second motor gear rotating.

A torque limiter is connected between the second motor gear and the first gear and the second gear, and the torque limiter and the third motor are mounted on the same side plate, which comprises a third gear, a steel ball, a first spring, a transmission disc, a limiting ring, a fourth gear, and a supporting shaft, and a second motor gear rotatingly connected to the side plate engages with the third gear, and the third gear is symmetrically mounted with a plurality of steel balls, a first spring installed between the steel balls and the third gear, the first spring is in a compressed state; the third gear is installed on the transmission disc, and can rotate relatively along the axis of the transmission disc, and a circular hole corresponding position of the steel ball is provided on the transmission disc , and the diameter of the circular hole is smaller than the diameter of the steel ball, and the transmission disc is fixedly connected with the fourth gear and installed on the supporting shaft, and can rotate around the supporting shaft; the limiting ring is installed between the third gear and the fourth gear, and can rotate relative to the third gear and the fourth gear.

The main buoyancy body is provided with through mounting holes, and the propellers are divided into two groups respectively horizontally located on the frame and vertically located in the mounting holes of the main buoyancy body.

The inspection device also comprises a variable buoyancy module, the variable buoyancy module including an upper cavity, a lower cavity, a fixed plate, a piston, a first sealing ring, a first motor, a bolt shaft, a first nut gear, a bearing, a first motor gear, a second nut gear, a bolt shaft, a waterproof joint, and a motor cable, and the fixed plate is mounted on the cylindrical upper cavity, the first motor is mounted on the fixed plate, and the first motor is mounted on the first motor gear, the first motor gear meshes with the first nut gear and the second nut gear, the first nut gear and the second nut gear have an equal number of teeth, and the first nut gear and the second nut gear are fixed to the fixed plate through bearings; the first nut gear is internally mounted with a first bolt shaft, and the second nut gear is internally mounted with a second bolt shaft, the first nut gear and the first bolt shaft, the second nut gear and the second bolt shaft are respectively composed of the same bolt-nut kinematic pair, the cylindrical lower cavity is connected to the upper cavity, the piston is installed with a first sealing ring, the piston is installed inside the lower cavity, and can be moved along the lower cavity: the first bolt shaft and the second bolt shaft are mounted on the piston; the upper cavity is installed with waterproof joints, and the motor cables are led out to the outside of the variable buoyancy module through the waterproof joints;
A hoisting point is mounted on the main buoyancy body, the main cable passes through the middle of the main buoyancy body and the hoisting point, and the inspection device also comprises a decoupler, which passes through the main cable and connects with the hoisting point: the decoupler comprises a decoupler body, a pin, a second spring, a steel wire rope, and a lifting rope, and the decoupler body passes through the main cable; the decoupler body is mounted with a lifting rope, and a removable pin is mounted internally, and a second spring is mounted between the pin and the decoupler body, and a steel wire rope is attached to the end of the pin;
The propeller comprises a base, a mounting frame, a second motor, a propulsion housing, a blade, a propulsion shaft, a coupling, an oil box, and a second sealing ring, the second motor is mounted on the base through the mounting frame, the second sealing ring is mounted between the propulsion housing and the base, the propulsion shaft passes through the base and the oil box and is mounted to the output shaft of the second motor through the coupling, and the blade is mounted to the propulsion shaft; a second sealing ring is mounted between the oil box and the base, the second sealing ring is mounted between the propulsion shaft and the base, and the second sealing ring between the propulsion shaft and the oil box; the oil box is a hollow structure with an inner cavity filled with lubricating oil or grease inside the inner cavity.

The present invention also provides a vision-guided intelligent fastening bolt inspection device, comprising:
a frame;
a main buoyancy body, which is mounted on the frame and serves as a main buoyancy source of the inspection device;
propellers, uesd for controlling the movement direction of the inspection device, the direction of movement is a first direction of movement;
an ultrasonic inspection module, which is used for ultrasonic inspection of fastening bolts;
further comprising:
   an underwater self-stabilization moving platform, which comprises an upper nut sliding block moving in a second direction of movement , a lower nut sliding block moving in a third direction of movement , a balancing weight block, and a self-stabilization driving part for driving the upper nut sliding block and the lower nut sliding block, the second direction of movement and the third direction of movement are always opposite, the ultrasonic inspection module is fixedly connected to the upper nut sliding block, the balancing weight block is fixedly connected to lower nut sliding block, or the ultrasonic inspection module is fixedly connected to the lower nut sliding block, the balancing weight block is fixedly connected to the upper nut sliding block.

In another embodiment, the self-stabilization driving part comprises side plates, which are oppositely arranged, a plurality of guiding shafts mounted between the side plates, and an upper and lower screw mounted between the side plates and capable of rotating, the upper nut sliding block slidingly sleeved on two of the guiding shafts and screwing with the upper screw, and the lower nut sliding block slidingly sleeved on the other two guiding shafts and screwing with the lower screw, the upper screw and the lower screw are threaded in opposite directions. Through the guidance of the guiding shaft, the upper nut sliding block and the lower nut sliding block run more stably, which can reduce the swing amplitude of the inspection device when it runs in water.

In another embodiment, the self-stabilization driving part comprises a first gear coaxially fixedly connected with the upper screw, a second gear coaxially fixedly connected with the lower screw, a second motor gear to drive the first and second gears to rotate, and a third motor driving the second motor gear rotating. The first gear and the second gear adopt the same power source, which can ensure their synchronization.

In another embodiment, a torque limiter is connected between the second motor gear and the first gear and the second gear, and the torque limiter and the third motor are mounted on the same side plate, which comprises a third gear, a steel ball, a first spring, a transmission disc, a limiting ring, a fourth gear, and a supporting shaft, and a second motor gear rotatingly connected to the side plate engages with the third gear, and the third gear is symmetrically mounted with a plurality of steel balls, a first spring installed between the steel balls and the third gear, the first spring is in a compressed state; the third gear is installed on the transmission disc, and can rotate relatively along the axis of the transmission disc, and a circular hole corresponding position of the steel ball is provided on the transmission disc , and the diameter of the circular hole is smaller than the diameter of the steel ball, and the transmission disc is installed on the supporting shaft after transmission disc is fixedly connected with the fourth gear, and can rotate around the supporting shaft; the limiting ring is installed between the third gear and the fourth gear, and can rotate relative to the third gear and the fourth gear. When the transmitted torque is too large, the third gear and the transmission disc will rotate relatively, and at this time, the torque limiter will not continue to transmit relative movement, to avoid the motor from locking and protect the safety of the motor underwater.

In another embodiment, the main buoyancy body is provided with through mounting holes, and the propellers are divided into two groups respectively horizontally located on the frame and vertically located in the mounting holes of the main buoyancy body. Installing a group of propellers in the mounting hole in the middle position of the main buoyancy body can improve the stability of the inspection device in operation.

In another embodiment, the inspection device also comprises a variable buoyancy module, the variable buoyancy module including an upper cavity, a lower cavity, a fixed plate, a piston, a first sealing ring, a first motor, a bolt shaft, a first nut gear, a bearing, a first motor gear, a second nut gear, a bolt shaft, a waterproof joint, and a motor cable, and the fixed plate is mounted on the cylindrical upper cavity, the first motor is mounted on the fixed plate, and the first motor is mounted on the first motor gear, the first motor gear meshes with the first nut gear and the second nut gear, the first nut gear and the second nut gear have an equal number of teeth, and the first nut gear and the second nut gear are fixed to the fixed plate through bearings; the first nut gear is internally mounted with a first bolt shaft, and the second nut gear is internally mounted with a second bolt shaft, the first nut gear and the first bolt shaft, the second nut gear and the second bolt shaft are respectively composed of the same bolt-nut kinematic pair, the cylindrical lower cavity is connected to the upper cavity, the piston is installed with a first sealing ring, the piston is installed inside the lower cavity, and can be moved along the lower cavity: the first bolt shaft and the second bolt shaft are mounted on the piston. Under the condition of mounting different loads, the buoyancy of the inspection device can be adjusted by the variable buoyancy module, so that the net buoyancy of the inspection device in water can be kept unchanged, and the stability of underwater control can be more easily protected under the condition of unchanged propeller; the first bolt shaft and the second bolt shaft are symmetrically arranged and move in the same direction, so that the circular piston can be prevented from rotating in the cylindrical lower cavity. The first bolt shaft and the second bolt shaft are arranged on both sides are closer to the friction point of the piston, thus reducing the distortion of the piston.

In another embodiment, the upper cavity is installed with waterproof joints, and the motor cables are led out to the outside of the variable buoyancy module through the waterproof joints. Waterproof joints are distributed at the four corners of the main buoyancy body, which can improve the stability of the inspection device.

In another embodiment, a hoisting point is mounted on the main buoyancy body, the main cable passes through the middle of the main buoyancy body and the hoisting point, and the inspection device also comprises a decoupler, which passes through the main cable and connects with the hoisting point. After hoisting, the decoupler can be separated from the main body of the device, and the interference of the lifting rope to the underwater swimming of the device is reduced. When hoisting is needed, the decoupler can be automatically installed by dropping it along the main cable. At this time, the inspection device can be conveniently hoisted out of the pool.

In another embodiment, the decoupler comprises a decoupler body, a pin, a second spring, a steel wire rope, and a lifting rope, and the decoupler body passes through the main cable; the decoupler body is mounted with a lifting rope, and a removable pin is mounted internally, and a second spring is mounted between the pin and the decoupler body, and a steel wire rope is attached to the end of the pin. The decoupler body falls along the main cable, and is embedded in the hoisting point under the action of gravity, and the pin extends into the clamping groove of the hoisting point under the pressure of the spring. At this time, the inspection device can be hoisted through the lifting rope. When the inspection device works underwater, the steel wire rope is pulled, and at this time, the pin is pulled out of the clamping groove of the hoisting point, and the lifting rope is pulled, so that the decoupling device can be separated from the inspection device, and the interference of the lifting rope to the underwater swimming of the invention can be reduced.

In another embodiment, the propeller includes a base, a mounting frame, a second motor, a propulsion housing, a blade, a propulsion shaft, a coupling, an oil box, and a second sealing ring, the second motor is mounted on the base through the mounting frame, the second sealing ring is mounted between the propulsion housing and the base, the propulsion shaft passes through the base and the oil box and is mounted to the output shaft of the second motor through the coupling, and the blade is mounted to the propulsion shaft. The oil box of the propellers is a hollow structure with an inner cavity. The inner cavity is filled with lubricating oil or grease, which can generate lubrication between the shaft and the sealing rings and reduce the friction resistance. The lubricating oil or grease in the cavity is beneficial to the dynamic sealing of the shaft in water.

In another embodiment, a second sealing ring is mounted between the oil box and the base, the second sealing ring is mounted between the propulsion shaft and the base, and the second sealing ring between the propulsion shaft and the oil box.

In another embodiment, the oil box is a hollow structure with an inner cavity filled with lubricating oil or grease inside the inner cavity.

The beneficial effect of the present invention is that: the balancing weight block of the lower nut sliding block installed in the the underwater self-stabilization moving platform and the ultrasonic inspection module installed in the upper nut sliding have the same underwater net weight, the two along the opposite direction of the same distance of the movement, to ensure that the underwater self-stabilization moving platform when it in the movement, the center of gravity to remain unchanged, is conducive to the invention to maintain the self-balance in the underwater. The ultrasonic inspection module ensures that the ultrasonic probe and the fastening bolt have a certain compression force, which can ensure a more effective transmission of ultrasonic waves: the rotation of the ultrasonic probe can be realized through the motor, which can change the direction of ultrasonic wave incidence, and better realize the inspection of the whole volume of the fastening bolt: through the visual guidance of the vertical alignment camera and the horizontal alignment camera, the automatic alignment of the ultrasonic probe and the fastening bolt can be realized.

### BRIEF DESCRIPTION OF THE DRAWINGS

Fig. 1 is a schematic diagram of fastening bolt inspection;
Fig. 2 is a front view of the present invention;
Fig. 3 is a perspective view of present invention;
Fig. 4 is a structural schematic diagram of a variable buoyancy module;
Fig. 5 is a structural schematic diagram of the propeller;
Fig. 6 is a structural schematic diagram of the underwater self-stabilization platform;
Fig. 7 is a sectional view of an underwater self-stabilization platform;
Fig. 8 is a structural schematic diagram of the torque limiter;
Fig. 9 is a structural schematic diagram of an ultrasonic inspection module;
Fig. 10 is a sectional view of an ultrasonic inspection module;
Fig. 11 is a structural schematic diagram of the decoupler when it is not locked ;
Fig. 12 is a structural schematic diagram of the decoupler when it is locked;
Fig. 13 is a schematic diagram of vertical alignment camera ;
Fig. 14 is a schematic diagram of horizontal alignment camera;
   1. Main buoyancy body, 2. Variable buoyancy module, 3. Propeller, 4. Underwater self-stabilization moving platform, 5. Ultrasonic inspection module, 6. Decoupler, 11. Frame, 13. Hoisting point, 14. Main cable, 15. Underwater flat plate, 16. Fastening bolt, 201. Upper cavity, 202. Lower cavity, 203. Fixed plate, 204. Piston, 205. First sealing ring, 206. First motor, 207. Bolt shaft, 208. First nut gear, 209. Bearing, 210. First motor gear, 211. Second nut gear, 212. Bolt shaft, 213 . Waterproof joint, 214 . Motor cable, 301. Base, 302. Mounting frame, 303. Second motor, 304 . Propulsion housing, 305. Blades, 306. Propulsion shaft, 307. Coupling, 308. Oil box, 309. Second sealing ring, 401. Side plate 402 . Guiding shaft, 403 . Upper nut sliding block, 404 . Upper screw, 405 . First gear, 406. Third motor, 407. Second motor gear, 408. Balancing weight block, 409. Torque limiter, 410. Second gear, 411. Lower nut sliding block, 412 . Lower screw, 4091 . Third gear, 4093 . Steel ball, 4094 . First spring, 4095. Transmission disc, 4096. Limiting ring, 4097. Fourth gear, 4098. Supporting shaft, 501. Probe housing, 502, Ultrasonic probe, 503. Compression spring, 504. Camera mounting plate, 505 . Housing connector, 506 . Fourth motor, 507 . Vertical alignment camera, 508 . Horizontal alignment camera, 601 . Decoupler body, 602. Pin, 603. Second spring, 605. Steel wire rope, 606. Lifting rope.

### DETAILED DESCRIPTION

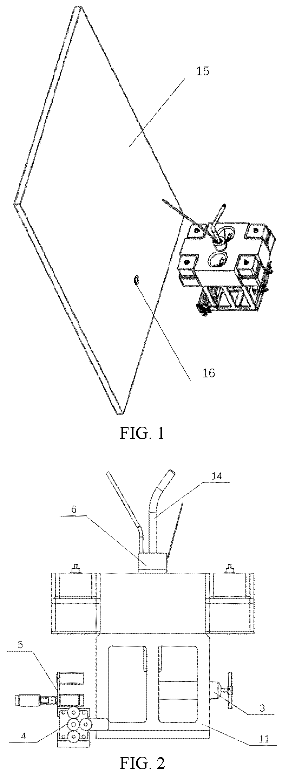

In the following, the invention will be described in detail with reference to the embodiment shown in the attached drawings:
As shown in Figures 1-3, a vision-guided intelligent fastening bolt inspection device includes a frame11; a main buoyancy body1, which is mounted on the frame and serves as the main buoyancy source of the inspection device; a variable buoyancy module2; a propeller3, used for controlling the movement direction of the inspection device, the direction of movement is a first direction of movement, the first direction of movement can be in any direction, and the main buoyancy body1 is provided with a through mounting hole, and the propeller3 is respectively horizontally arranged on the frame11 and vertically arranged in the mounting hole of the main buoyancy body; an ultrasonic inspection module5; an underwater self-stabilization moving platform4, an upper nut sliding block403 moving in the second direction of movement and a lower nut sliding block411 moving in the third direction of movement , a balancing weight block408, and a self-stabilization driving part for driving the upper nut sliding block403 and the lower nut sliding block411 to move, the second direction of movement and the third direction of movement are always opposite, wherein the ultrasonic inspection module5 is fixedly connected to the upper nut sliding block403, and the balancing weight block 408 is fixedly connected to lower nut sliding block411, or the ultrasonic inspection module5 is fixedly connected to the lower nut sliding block411, the balancing weight block 408 is fixedly connected to the upper nut sliding block403. In this embodiment, the ultrasonic inspection module 5 is fixedly connected to the upper nut sliding block 403, the balancing weight block 408 is fixedly connected to the lower nut sliding block 411.

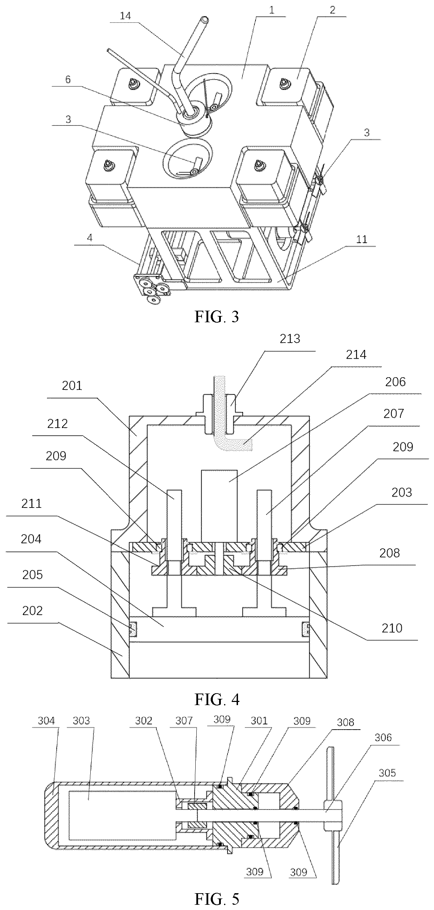

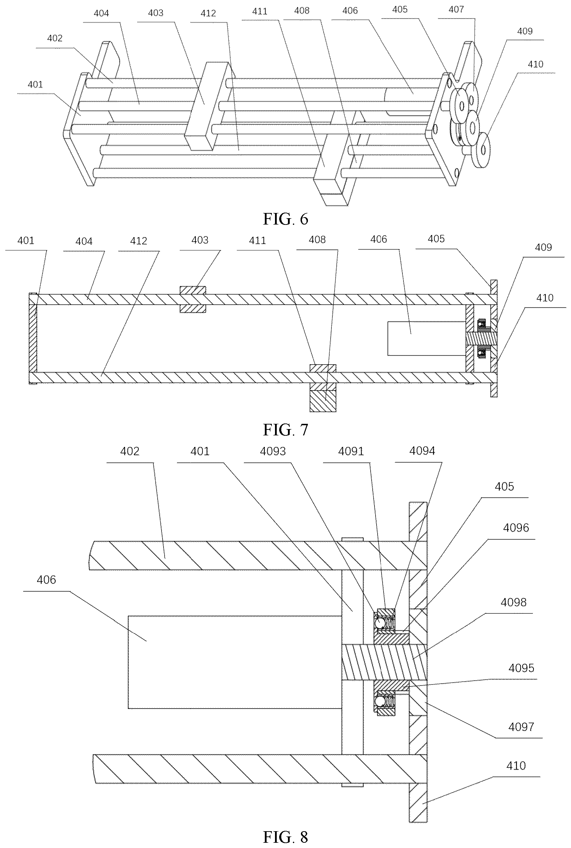

Specifically, as shown in FIG. 6, the self-stabilization driving part, which comprises oppositely disposed side plates, guiding shafts, an upper screw, and a lower screw; the upper nut sliding block is slidably sleeved on two of the guiding shafts and is screwing with the upper screw; the lower nut sliding block is slidably sleeved on the other two guiding shafts and is screwing with the lower screw; and the directions of threads of the upper screw and the lower screw are opposite. The self-stabilization driving part comprises a first gear driving the upper nut sliding block to move, a second gear driving the lower nut sliding block to move, a second motor gear driving the first gear and the second gear to rotate, and a third motor driving the second motor gear to rotate. A torque limiter is connected between the second motor gear, the first gear, and the second gear, and the torque limiter comprises a third gear, a steel ball, a first spring, a transmission disc, a limiting ring, a fourth gear, and a supporting shaft, as shown in Figures 5 and 6. A plurality of guiding shafts 402 are installed on a side plate 401, and an upper screw 404 and a lower screw 412 are installed on the side plate 401. The upper nut sliding block 403 and the upper screw 404 form an upper bolt-nut kinematic pair, and the lower nut sliding block 411 and the lower screw 412 form a lower bolt-nut kinematic pair. A first gear 405 is installed at the end of the upper screw 404, and a second gear 410 is installed at the end of the lower screw 412. The torque limiter 409 is installed on the side plate, The fourth gear 4097 on the torque limiter 409 meshes with the first gear 405 and the second gear 410 at the same time, and the first gear 405, and the second gear 410 have the same number of teeth; the third motor 406 is mount on the side plate, and the second motor gear 407 is mounted on the output shaft of the third motor 406, and the second motor gear 407 is mesh with the third gear 4091 on the torque limiter 409; the counterweight 408 is mounted on the lower nut sliding block 411. The upper nut sliding block 403 and the upper screw 404 form a bolt-nut kinematic pair, and the lower nut sliding block 411 and the lower screw 412 form a bolt-nut kinematic pair, with the same pitch and opposite directions. The third motor 406 drives the second motor gear 407 to rotate, the torque limiter 409 drives the first gear 405 and the second gear 410 to rotate in the same direction. The upper nut sliding block 403 and the lower nut sliding block 411 move at the same speed and in opposite directions through the upper bolt-nut kinematic pair and the lower bolt-nut kinematic pair with the same pitch and opposite directions.

As shown in figures 7 and 8, a plurality of steel balls 4093 are symmetrically installed on the third gear 4091, and a first spring 4094 is installed between the steel balls 4093 and the third gear 4091, and the first spring 4094 is in a compressed state; the third gear 4091 is installed on the transmission disk 4095 and can rotate relatively along the axis of the transmission disk 4095. The transmission disk 4095 is provided with a circular hole corresponding to the steel ball 4093, and the diameter of the circular hole is smaller than the diameter of the steel ball 4093. The transmission disk 4095 is fixedly connected with the fourth gear 4097 and then installed on the supporting shaft 4098 and can rotate around the supporting shaft 4098. The limiting ring 4096 is installed between the third gear 4091 and the fourth gear 4097 and can rotate relative to the third gear 4091 and the fourth gear 4097. The steel balls 4093 mounted on the third gear 4091 are embedded into the circular holes of the transmission disc 4095 through the first spring 4094. When the third gear 4091 rotates, the steel balls 4093 transmit the force to the transmission disc 4095, which drives the transmission disc 4095 to rotate around the supporting shaft 4098. The fourth gear 4097 fixedly connected to the transmission disc 4095 rotates at the same time, realizing the transmition of the rotation movement from the third gear 4091 to the fourth gear 4097. When the transmitted torque from the third gear 4091 to the fourth gear 4097 is too large, which exceeds the pressure of the first spring 4094 on the steel ball 4093, the third gear 4091 and the transmission disk 4095 will rotate relatively, and the steel ball 4093 will be squeezed into the hole of the third gear 4091. When the transmitted torque is too large, the third gear 4091 and the transmission disc 4095 will rotate relatively, and at this time, the torque limiter will not continue to transmit relative movement, to avoid the motor from locking and protect the safety of the motor underwater.

As shown in Figures 3 and 4, the main buoyancy body 1 is roughly square-shaped, provided with four mounting positions at its four corners, and the variable buoyancy module is disposed on the four mounting positions to equalize the buoyancy force on each part of the adjustable inspection device, and to facilitate more effective and rapid adjustment of the buoyancy force of the inspection device. Each variable buoyancy module includes an upper cavity 201, a lower cavity 202, a fixed plate 203, a piston 204, a first sealing ring 205, a first motor 206, a bolt shaft 207, a first nut gear 208, a bearing 209, a first motor gear 210, a second nut gear 211, a bolt shaft 212, a waterproof joint 213 and a motor cable 214. The fixed plate is installed on the cylindrical upper cavity, the fixed plate 203 is installed on the cylindrical upper cavity 201, and the first motor 206 is installed on the fixed plate 203. The first motor gear 210 is installed on the first motor 206, the first motor gear 210 is meshed with the first nut gear 208 and the second nut gear 211. The first nut gear 208 and the second nut gear 211 have equal number of teeth, and the first nut gear 208 and the second nut gear 211 are fixed to the fixed plate 203 by bearings 209. A bolt shaft 207 is installed in the interior of the first nut gear 208, and a bolt shaft 212 is installed in the interior of the second nut gear 211. The bolt-nut kinematic pair composed of the first nut gear 208 and the bolt shaft 207 and the bolt-nut kinematic pair composed of the second nut gear 211 with the bolt shaft 212 installed inside have the same specification parameters. The cylindrical lower cavity 202 is connected with the upper cavity 201, and the piston 204 is provided with a first sealing ring 205, which is installed in the interior of the lower cavity 202 and can move along the lower cavity; a bolt shaft 207 and a bolt shaft 212 are mounted on the piston 204. A waterproof joint 213 is installed at the upper part of the upper cavity 201, and the motor cable 214 is led out of the variable buoyancy module through the waterproof joint 213. The first motor 206 rotates, which drives the first motor gear 210 to rotate, and drives the first nut gear 208 and the second nut gear 211 to rotate. The first nut gear 208 and the second nut gear 211 rotate in the same direction and speed. The bolt-nut kinematic pair composed of the first nut gear 208 and the bolt shaft 207 drives the bolt shaft 207 to move along the axial direction of the variable buoyancy module, and the bolt-nut kinematic pair composed of the second nut gear 211 and the bolt shaft 212 drive the bolt shaft 212 to move along the axial direction of the variable buoyancy module, with the same moving direction and speed, to jointly drive the piston 204 to move, to realize the volume changing of the variable buoyancy module 2 and changing of the buoyancy force.

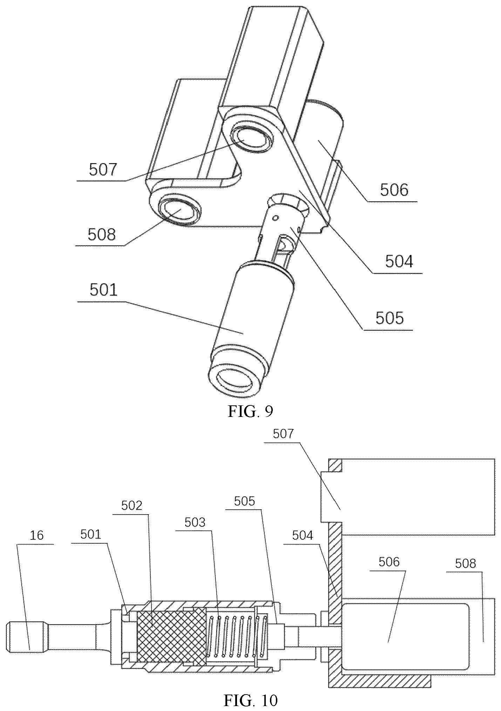

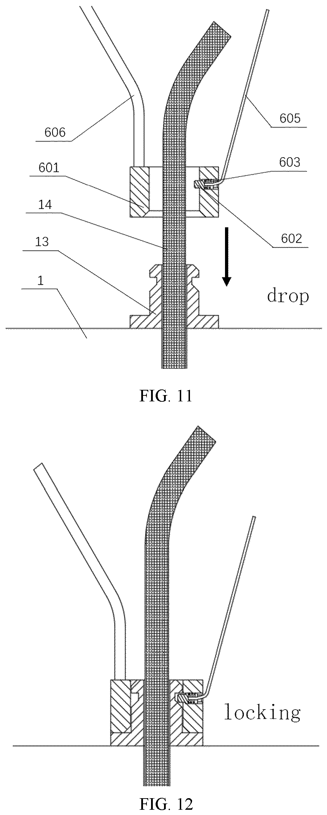

As shown in Figures 2 and 11-12, a hoisting point is installed on the main buoyancy body, and the main cable passes between the main buoyancy body and the hoisting point, as shown in Figure 10, the inspection device also includes a decoupler, which is connected with the hoisting point through the main cable. After hoisting, the decoupler can be separated from the main body of the device, and the interference of the lifting rope to the underwater swimming of the device is reduced. When hoisting is needed, the decoupler can be dropped along the main cable, so that the automatic installation of the decoupler can be realized, and at this time, the inspection device can be conveniently hoisted out of the pool. The decoupler comprises a decoupler body 601, a pin 602, a second spring 603, a steel wire rope 605 and a lifting rope 606, wherein the decoupler body 601 passes through the main cable 14, the lifting rope 606 is installed on the decoupler body 601, and a movable pin 602 is installed inside, the second spring 603 is installed between the pin 602 and the decoupler body 601, and the steel wire rope 605 is connected to the tail end of the pin. During hoisting, the decoupler body 601 falls along the main cable 14 and is embedded in the hoisting point 13 under the action of gravity, and the pin 602 extends into the clamping groove of the hoisting point 13 under the pressure of the spring. At this time, the hoisting of the inspection device can be realized through the lifting rope 606. When the inspection device works underwater, the steel wire rope 605 is pulled, at this time, the pin 602 is pulled out of the clamping groove of the hoisting point 13, and the lifting rope 606 is pulled, so that the decoupler 6 can be separated from the inspection device, and the interference of the lifting rope to the inspection device when swimming underwater can be reduced.

As shown in Figures 5, the propeller comprises a base, a mounting frame, a second motor, a propulsion housing, blades, a propulsion shaft, a coupling, an oil box and a second sealing ring. The second motor 303 is mounted on the base 301 through a mounting frame302, and a second sealing ring 309 is installed between the propulsion housing 304 and the base 301, and the second sealing ring 309 is installed between the oil box 308 and the base 301; the propulsion shaft 306 passes through the base 301 and oil box 308, and is mounted on the output shaft of the second motor 303 through a coupling 307; a second sealing ring 309 is installed between the propulsion shaft 306 and the base 301; and a second sealing ring 309 is installed between the propulsion shaft 306 and the oil box 308; the oil box 308 is a hollow structure with an inner cavity filled with lubricating oil or grease. The blades are mounted on the propulsion shaft 306. When the second motor 303 rotates, the propulsion shaft 306 is driven to rotate through the coupling 307, and the blades 305 are driven to rotate, so that the thrust force is generated in the water. Forward or backward thrust force is achieved by controlling the forward and reverse rotation of the second motor 303.

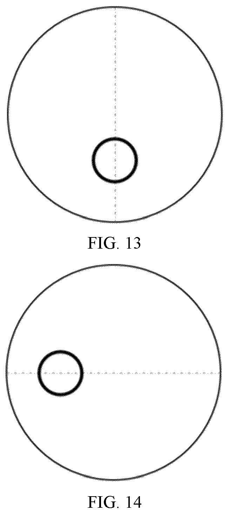

As shown in figures 9,10,13 and 14, a cylindrical ultrasonic probe 502 is placed in a probe housing 501, and the interior of the probe housing 501 is provided a groove. The ultrasonic probe 502 is machined or installed with a protrusion matching with the groove in the housing 501, and can move along the axis of the probe housing 501, but the two cannot rotate relatively. A housing connector 505 is installed at the other end of the probe housing 501, and a compression spring 503 is installed between the housing connector 505 and the ultrasonic probe 502, and the spring is in a compressed state. The housing connector 505 is mounted on the output shaft of the fourth motor 506, and the fourth motor 506 is mounted on the camera mounting plate 504. A horizontal alignment camera 508 and a vertical alignment camera 507 are mounted on the camera mounting plate 504. When the ultrasonic inspection module 5 is aligned with the fastening bolt 16, the probe housing 501 is closely attached to the boss end face of the fastening bolt 16, and the head of the fastening bolt 16 lifts the ultrasonic probe 502. Under the action of the compression spring 503, the ultrasonic probe 502 and the fastening bolt 16 generate a certain pre-tightening force, thus ensuring the effective transmission of ultrasonic waves. The fourth motor 506 drives the housing connector 505 and the probe housing 501 to rotate, and the ultrasonic probe 502 is driven to rotate due to the cooperation between the groove of the housing 501 and the protrusion processed or installed by the ultrasonic probe 502, thus changing the incident direction of ultrasonic waves. The vertical alignment camera 507 and the horizontal alignment camera 508 capture the image of the fastening bolt 16 in real time, and compare the vertical centerline of the image of the vertical alignment camera 507 with the vertical centerline of the fastening bolt 16 through the machine vision algorithm. When the vertical centerlines of the two are deviated, the two are kept coincident by underwater self-stabilization moving platform. Comparing the image horizontal center line of the horizontal alignment camera 508 with the image horizontal center line of the fastening bolt 16, when the two horizontal center lines are deviated, the propeller 10 installed in the vertical direction is used to control the inspection device to float or sink, to keep them coincident. When the images of the horizontal alignment camera 402 and the horizontal alignment camera 403 are both aligned, the propeller 3 installed in the horizontal direction can realize the advancement of the inspection device in the water, so that the ultrasonic probe 502 can be automatically aligned with the fastening bolt 16.

The above embodiments are only for explaining the technical concept and characteristics of the present invention, and their purpose is to enable people familiar with this technology to understand the content of the present invention and implement it accordingly, without limiting the protection scope of the present invention. All equivalent changes or modifications made according to the spirit of the present invention should be included in the protection scope of the present invention.

## Claims

1. A vision-guided intelligent fastening bolt inspection device, comprising:
a frame;
a main buoyancy body, which is mounted on the frame and serves as a main source of buoyancy of the inspection device;
propellers, used for controlling the movement direction of the inspection device, the direction of movement is a first direction of movement ;
an ultrasonic inspection module, which is used for ultrasonic inspection of fastening bolts;
**characterized by** further comprising:
an underwater self-stabilization moving platform, which comprises an upper nut sliding block moving in a second direction of movement , a lower nut sliding block moving in a third direction of movement , a balancing weight block, and a self-stabilization driving part for driving the upper nut sliding block and the lower nut sliding block to move, the second direction of movement and the third direction of movement are always opposite, the ultrasonic inspection module is fixedly connected to the upper nut sliding block, the balancing weight block is fixedly connected to lower nut sliding block, or the ultrasonic inspection module is fixedly connected to the lower nut sliding block, the balancing weight block is fixedly connected to the upper nut sliding block; the self-stabilization driving part comprises side plates, which are oppositely arranged, a plurality of guiding shafts mounted between the side plates, and an upper screw and a lower screw mounted between the side plates and capable of rotating, the upper nut sliding block slidingly sleeved on two of the guiding shafts and screwing with the upper screw, and the lower nut sliding block slidingly sleeved on the other two guiding shafts and screwing with the lower screw, the upper screw and the lower screw are threaded in opposite directions; the self-stabilization driving part comprises a first gear coaxially fixedly connected with the upper screw, a second gear coaxially fixedly connected with the lower screw, a second motor gear to drive the first and second gears to rotate, and a third motor driving the second motor gear rotating;
a torque limiter is connected between the second motor gear and the first gear and the second gear, and the torque limiter and the third motor are mounted on the same side plate, which comprises a third gear, a steel ball, a first spring, a transmission disc, a limiting ring, a fourth gear, and a supporting shaft, and the second motor gear rotatingly connected to the side plate engages with the third gear, and the third gear is symmetrically mounted with a plurality of steel balls, a first spring installed between the steel balls and the third gear, the first spring is in a compressed state; the third gear is installed on the transmission disc, and can rotate relatively along the axis of the transmission disc, and a circular hole corresponding position of the steel ball is provided on the transmission disc, and the diameter of the circular hole is smaller than the diameter of the steel ball, and the transmission disc is installed on the supporting shaft after transmission disc is fixedly connected with the fourth gear, and can rotate around the supporting shaft; the limiting ring is installed between the third gear and the fourth gear, and can rotate relative to the third gear and the fourth gear;
the main buoyancy body is provided with through mounting holes, and the propellers are divided into two groups respectively horizontally located on the frame and vertically located in the mounting holes of the main buoyancy body;
the inspection device also comprises a variable buoyancy module, the variable buoyancy module including an upper cavity, a lower cavity, a fixed plate, a piston, a first sealing ring, a first motor, a bolt shaft, a first nut gear, a bearing, a first motor gear, a second nut gear, a bolt shaft, a waterproof joint, and a motor cable, and the fixed plate is mounted on the cylindrical upper cavity, the first motor is mounted on the fixed plate, and the first motor is mounted with the first motor gear, the first motor gear meshes with the first nut gear and the second nut gear, the first nut gear and the second nut gear have an equal number of teeth, and the first nut gear and the second nut gear are fixed to the fixed plate through bearings; the first nut gear is internally mounted with a first bolt shaft, and the second nut gear is internally mounted with a second bolt shaft, the first nut gear and the first bolt shaft, the second nut gear and the second bolt shaft are respectively composed of the same bolt-nut kinematic pair, the cylindrical lower cavity is connected to the upper cavity, the piston is installed with a first sealing ring, the piston is installed inside the lower cavity, and can be moved along the lower cavity; the first bolt shaft and the second bolt shaft are mounted on the piston; the upper cavity is installed with waterproof joints, and the motor cables are led out to the outside of the variable buoyancy module through the waterproof joints;
a hoisting point is mounted on the main buoyancy body, the main cable passes through the middle of the main buoyancy body and the hoisting point, and the inspection device also comprises a decoupler, which passes through the main cable and connects with the hoisting point; the decoupler comprises a decoupler body, a pin, a second spring, a steel wire rope, and a lifting rope, and the decoupler body passes through the main cable; the decoupler body is mounted with the lifting rope, and the removable pin is mounted internally, and the second spring is mounted between the pin and the decoupler body, and the steel wire rope is attached to the end of the pin;
the propeller comprises a base, a mounting frame, a second motor, a propulsion housing, a blade, a propulsion shaft, a coupling, an oil box, and second sealing rings, the second motor is mounted on the base through the mounting frame, the second sealing ring is mounted between the propulsion housing and the base, the propulsion shaft passes through the base and the oil box and is mounted to the output shaft of the second motor through the coupling, and the blade is mounted to the propulsion shaft; the second sealing rings are mounted between the oil box and the base, between the propulsion shaft and the base, and between the propulsion shaft and the oil box; the oil box is a hollow structure with an inner cavity filled with lubricating oil or grease inside the inner cavity.

2. A vision-guided intelligent fastening bolt inspection device, comprising:
a frame;
a main buoyancy body, which is mounted on the frame and serves as a main buoyancy source of the inspection device;
a propeller, uesd for controlling the movement direction of the inspection device, the direction of movement is a first direction of movement;
an ultrasonic inspection module, which is used for ultrasonic inspection of fastening bolts;
**characterized by** further comprising:
an underwater self-stabilization moving platform, which comprises an upper nut sliding block moving in a second direction of movement , a lower nut sliding block moving in a third direction of movement , a balancing weight block, and a self-stabilization driving part for driving the upper nut sliding block and the lower nut sliding block, the second direction of movement and the third direction of movement are always opposite, the ultrasonic inspection module is fixedly connected to the upper nut sliding block, the balancing weight block is fixedly connected to lower nut sliding block, or the ultrasonic inspection module is fixedly connected to the lower nut sliding block, the balancing weight block is fixedly connected to the upper nut sliding block.

3. The vision-guided intelligent fastening bolt inspection device according to claim 2, wherein the self-stabilization driving part comprises side plates, which are oppositely arranged, a plurality of guiding shafts mounted between the side plates, and an upper and lower screw mounted between the side plates and capable of rotating, the upper nut sliding block slidingly sleeved on two of the guiding shafts and screwing with the upper screw, and the lower nut sliding block slidingly sleeved on the other two guiding shafts and screwing with the lower screw, the upper screw and the lower screw are threaded in opposite directions.

4. The vision-guided intelligent fastening bolt inspection device according to claim 2, wherein the self-stabilization driving part comprises a first gear coaxially fixedly connected with the upper screw, a second gear coaxially fixedly connected with the lower screw, a second motor gear to drive the first and second gears to rotate, and a third motor driving the second motor gear rotating.

5. The vision-guided intelligent fastening bolt inspection device according to claim 4, wherein a torque limiter is connected between the second motor gear and the first gear and the second gear, and the torque limiter and the third motor are mounted on the same side plate, which comprises a third gear, a steel ball, a first spring, a transmission disc, a limiting ring, a fourth gear, and a supporting shaft, and a second motor gear rotatingly connected to the side plate engages with the third gear, and the third gear is symmetrically mounted with a plurality of steel balls, a first spring installed between the steel balls and the third gear, the first spring is in a compressed state; the third gear is installed on the transmission disc, and can rotate relatively along the axis of the transmission disc, and a circular hole corresponding position of the steel ball is provided on the transmission disc , and the diameter of the circular hole is smaller than the diameter of the steel ball, and the transmission disc is installed on the supporting shaft after transmission disc is fixedly connected with the fourth gear , and can rotate around the supporting shaft; the limiting ring is installed between the third gear and the fourth gear, and can rotate relative to the third gear and the fourth gear.

6. The vision-guided intelligent fastening bolt inspection device according to claim 2, wherein the main buoyancy body is provided with through mounting holes, and the propellers are divided into two groups respectively horizontally located on the frame and vertically located in the mounting holes of the main buoyancy body.

7. The vision-guided intelligent fastening bolt inspection device according to claim2, wherein the inspection device also comprises a variable buoyancy module, the variable buoyancy module including an upper cavity, a lower cavity, a fixed plate, a piston, a first sealing ring, a first motor, a bolt shaft, a first nut gear, a bearing, a first motor gear, a second nut gear, a bolt shaft, a waterproof joint, and a motor cable, and the fixed plate is mounted on the cylindrical upper cavity, the first motor is mounted on the fixed plate, and the first motor is mounted on the first motor gear, the first motor gear meshes with the first nut gear and the second nut gear, the first nut gear and the second nut gear have an equal number of teeth, and the first nut gear and the second nut gear are fixed to the fixed plate through bearings; the first nut gear is internally mounted with a first bolt shaft, and the second nut gear is internally mounted with a second bolt shaft, the first nut gear and the first bolt shaft, the second nut gear and the second bolt shaft are respectively composed of the same bolt-nut kinematic pair, the cylindrical lower cavity is connected to the upper cavity, the piston is installed with a first sealing ring, the piston is installed inside the lower cavity, and can be moved along the lower cavity: the first bolt shaft and the second bolt shaft are mounted on the piston.

8. The vision-guided intelligent fastening bolt inspection device according to claim 7, wherein the upper cavity is installed with waterproof joints, and the motor cables are led out to the outside of the variable buoyancy module through the waterproof joints.

9. The vision-guided intelligent fastening bolt inspection device according to claim 2, wherein a hoisting point is mounted on the main buoyancy body, the main cable passes through the middle of the main buoyancy body and the hoisting point, and the inspection device also comprises a decoupler, which passes through the main cable and connects with the hoisting point.

10. The vision-guided intelligent fastening bolt inspection device according to claim 9, wherein the decoupler comprises a decoupler body, a pin, a second spring, a steel wire rope, and a lifting rope, and the decoupler body passes through the main cable; the decoupler body is mounted with a lifting rope, and a removable pin is mounted internally, and a second spring is mounted between the pin and the decoupler body, and a steel wire rope is attached to the end of the pin.

11. The vision-guided intelligent fastening bolt inspection device according to claim 2, wherein the propeller comprises a base, a mounting frame, a second motor, a propulsion housing, a blade, a propulsion shaft, a coupling, an oil box, and a second sealing ring, the second motor is mounted on the base through the mounting frame, the second sealing ring is mounted between the propulsion housing and the base, the propulsion shaft passes through the base and the oil box and is mounted to the output shaft of the second motor through the coupling, and the blade is mounted to the propulsion shaft.

12. The vision-guided intelligent fastening bolt inspection device according to claim 11, wherein a second sealing ring is mounted between the oil box and the base, the second sealing ring is mounted between the propulsion shaft and the base, and the second sealing ring between the propulsion shaft and the oil box.

13. The vision-guided intelligent fastening bolt inspection device according to claim 11, wherein the oil box is a hollow structure with an inner cavity filled with lubricating oil or grease inside the inner cavity.
